(19) Europäisches Patentamt
European Patent Office
Office européen des brevets

(11) **EP 2 168 836 B1**

(12) **FASCICULE DE BREVET EUROPEEN**

(45) Date de publication et mention
de la délivrance du brevet:
**21.11.2012 Bulletin 2012/47**

(21) Numéro de dépôt: **09305697.6**

(22) Date de dépôt: **22.07.2009**

(51) Int Cl.:
*F16H 59/48* *(2006.01)*      *F16H 61/02* *(2006.01)*
*B60W 40/107* *(2012.01)*      *B60W 50/06* *(2006.01)*
*B60W 40/06* *(2012.01)*      *B60W 30/18* *(2012.01)*
*B60W 40/12* *(2012.01)*

(54) **Procédé d'estimation de l'accélération longitudinale atteignable sur le rapport supérieur au rapport actuel, pour un véhicule équipé d'une boîte de vitesse à rapports discrets**

Verfahren zur Schätzung der Längsbeschleunigung, die ein Auto mit einer diskreten Getriebeübersetzung in den nächst höheren Gang erreichen kann

Method for estimating the maximum possible longitudinal acceleration that can be achieved with the next higher transmission ratio for a vehicle equipped with a discrete gearing system

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.09.2008 FR 0856582**

(43) Date de publication de la demande:
**31.03.2010 Bulletin 2010/13**

(73) Titulaire: **Renault S.A.S.**
**92100 Boulogne-Billancourt (FR)**

(72) Inventeur: **Vandekerkhove, Rémi**
**75012 Paris (FR)**

(56) Documents cités:
**EP-A- 0 532 957**      **DE-A1- 19 854 254**
**DE-A1- 19 921 937**      **FR-A- 2 461 169**
**FR-A- 2 847 636**      **JP-A- 4 321 748**
**JP-A- 2003 267 086**

**Description**

La présente invention concerne la transmission d'un véhicule automobile équipé d'une boîte de vitesses automatique, plus particulièrement l'accélération longitudinale atteignable sur un rapport de transmission supérieur au rapport actuel de la boîte de vitesses automatique.

Une transmission automatique mécaniquement couplée à un moteur à combustion interne transforme le point un fonctionnement du moteur, défini par un régime moteur et un couple moteur, en un état dynamique à la roue, déterminant un couple à la roue et une vitesse de déplacement du véhicule, de sorte que soit déterminé le comportement dynamique du véhicule. La transmission automatique permet, sous la commande d'un calculateur spécifique, de déterminer le rapport de transmission adapté à une situation de roulage selon des conditions prédéterminées.

Une transmission automatique peut comporter une boîte de vitesses à rapport discret, de sorte que le calculateur spécifique puisse commander un changement de rapport de transmission qui entraîne une augmentation ou une réduction discontinue du rapport de transmission.

Lorsqu'un véhicule équipé d'une transmission automatique se trouve en montée, si la transmission effectue un passage montant de rapport de transmission, et que cela entraîne une perte de vitesse du véhicule due au fait que le rapport du régime moteur sur le couple moteur après ce passage montant est trop faible pour maintenir la vitesse du véhicule, la situation est inconfortable pour le conducteur. De plus, la perte de vitesse entraîne rapidement une demande de rétrogradation. La succession d'un passage montant de rapport de transmission, et d'une rétrogradation, appelée pompage de rapport, est elle aussi mal perçue par le conducteur.

Ce phénomène se produit généralement lorsqu'un véhicule équipé d'une transmission automatique est soumis à un certain niveau d'efforts résistants qui sont en pratique causés par l'ascension d'une route pentue, une présence de vent assez fort, une charge importante du véhicule, ou encore lorsque le véhicule se déplace en altitude, c'est-à-dire sous des pressions atmosphériques relativement faibles.

Ce phénomène est généralement évité par un calcul de la pente et l'application d'une loi de passage spécifique aux ascensions de pente lorsque le véhicule s'y trouve. Les lois de passage adaptées à une ascension de pente font en sorte de retarder les passages montants de rapport de transmission afin de garantir un couple moteur suffisant, et donc une accélération potentielle suffisante après le passage montant de rapport. Cependant, la mise au point de ces lois de passage adaptées aux différents profils de routes est longue et complexe.

Le document FR 2 842 579 propose un procédé capable de supprimer des phénomènes de pompage de rapport lors d'une ascension de pente, se fondant sur l'estimation de l'accélération longitudinale qu'un véhicule automobile peut potentiellement atteindre après un passage montant de rapport de transmission, en fonction de l'accélération actuelle, du couple moteur actuel et de la différence de couple entre le couple avant passage montant et le couple après passage montant. Cette accélération potentielle est ensuite utilisée pour interdire les passages montants tant qu'elle ne dépasse pas le seuil de confort pour le conducteur.

Cependant le procédé d'estimation de l'accélération potentielle après passage montant comporte des inconvénients. En effet, l'estimation de l'accélération potentielle sur le rapport de transmission supérieur, c'est-à-dire le rapport de transmission après passage montant, se fonde sur des paramètres du moteur et l'enfoncement de la pédale d'accélérateur et non sur le couple moteur maximal atteignable, c'est-à-dire pour un enfoncement total de la pédale d'accélérateur.

De plus, le facteur de correction appliqué dans le calcul du couple à la roue pour le rapport supérieur est calculé en calculant le ratio de perte de couple correspondant au rapport entre le couple moteur effectif et le couple moteur théorique calculé en fonction du régime moteur et de l'angle de la pédale d'accélérateur au moyen d'une cartographie. Le facteur de correction ainsi calculé se trouve faussé étant donné que le couple moteur théorique calculé par la transmission est souvent significativement différent du couple de consigne réellement appliqué par le moteur.

D'autre part, l'accélération estimée par le procédé décrit dans le document cité ci-dessus, se fonde sur le ratio instantané de perte de couple avant un passage montant de rapport de transmission, qui n'est pas représentatif du ratio de perte de couple qui sera observé après le passage montant. In fine, l'accélération prévue sur le rapport supérieur est largement supérieure à l'accélération qui sera réellement constatée après passage. On pourra donc autoriser un passage montant en estimant que l'accélération après passage sera suffisante alors qu'il n'en est rien.

On pourra se référer aux documents JP 2003 267086, FR 2 847 636 et DE 198 54 254 qui décrivent des procédés d'estimation de l'accélération longitudinale potentielle.

On peut également se référer au document JP 04 321748 qui décrit que l'accélération longitudinale potentielle est calculée en tenant compte du couple moteur maximal théorique calculé en fonction du régime moteur potentiel pour la valeur du rapport de transmission potentiel.

En outre, les documents FR 2 461 169 et DE 199 21 937 décrivent des procédés de calcul de l'accélération potentielle.

L'invention vise à améliorer le procédé d'estimation de l'accélération longitudinale potentielle après un passage montant de rapport de transmission.

Dans un aspect de l'invention, il est proposé selon un mode de mise en oeuvre, un procédé d'estimation de l'accélération longitudinale potentielle pour un rapport de transmission potentiel d'un véhicule automobile équipé d'une boîte de vitesses automatique, le véhicule

étant en cours de déplacement avec un rapport de transmission en cours de la boîte de vitesses, dans lequel on détermine la masse du véhicule, on mesure l'accélération pour le rapport de transmission en cours, on estime une valeur du couple moteur en cours pour le rapport de transmission en cours, on estime l'accélération potentielle du véhicule pour la valeur du rapport de transmission potentiel, et

on calcule l'accélération longitudinale potentielle du véhicule en tenant compte du couple moteur maximal théorique calculé en fonction du régime moteur potentiel pour la valeur du rapport de transmission potentiel.

Selon ce procédé, un facteur de correction est déterminé à partir d'un ratio de perte de couple instantané, correspondant au rapport entre l'estimation du couple moteur en cours et une valeur de consigne de couple moteur appliquée par le moteur,

le facteur de correction étant déterminé à partir de la moyenne temporelle du ratio de perte de couple instantané correspondant au rapport entre l'estimation du couple moteur en cours et une valeur de consigne de couple moteur appliquée par le moteur, lorsque le couple moteur de consigne appliquée par le moteur est supérieur à un seuil.

De préférence, on estime l'accélération potentielle du véhicule pour une valeur de rapport de transmission potentielle en tenant compte également du couple à la roue en cours pour le rapport de transmission en cours, et du couple à la roue potentiel pour le rapport de transmission potentiel.

De préférence, pour une valeur de couple moteur de consigne appliquée par le moteur inférieure au seuil, la valeur du facteur de correction est maintenue égale à la dernière valeur calculée de la moyenne temporelle du ratio de perte de couple instantané correspondant au rapport entre l'estimation du couple moteur en cours et une valeur de consigne de couple moteur appliqué par le moteur.

La moyenne temporelle du ratio de perte de couple moteur appliqué par le moteur est avantageusement déterminée par un filtrage au premier ordre, avec une constante de temps réglable.

Selon un autre aspect de l'invention, il est proposé selon un mode de réalisation, un dispositif d'estimation de l'accélération longitudinale potentielle pour un rapport de transmission potentiel d'un véhicule automobile équipé d'une boîte de vitesses automatique, le véhicule étant en cours de déplacement avec un rapport de transmission en cours de la boîte de vitesses, comprenant des moyens de détermination de la masse du véhicule, des moyens de mesure aptes à mesurer l'accélération en cours pour le rapport de transmission en cours, des moyens d'estimation du couple moteur en cours aptes à estimer le couple moteur pour le rapport de transmission en cours, et

des moyens d'estimation de l'accélération potentielle aptes à estimer l'accélération longitudinale potentielle du véhicule pour la valeur de rapport de transmission potentiel à partir d'un couple moteur maximal théorique calculé en fonction du régime moteur potentiel pour la valeur du rapport de transmission potentiel.

Il comprend également des moyens de correction aptes à calculer le facteur de correction à partir d'un ratio de perte de couple instantané, correspondant au rapport entre l'estimation du couple moteur en cours et une valeur de consigne de couple moteur appliqué par le moteur, et

des moyens de calcul aptes à calculer la moyenne temporelle du ratio de perte de couple instantané correspondant au rapport entre l'estimation du couple moteur en cours et une valeur de consigne de couple moteur appliqué par le moteur, lorsque le couple moteur de consigne appliqué par le moteur est supérieur à un seuil.

De préférence, les moyens d'estimation de l'accélération potentielle comprennent des moyens de détermination du couple à la roue en cours pour le rapport de transmission en cours, et des moyens de détermination du couple à la roue potentiel pour le rapport de transmission potentiel.

Le dispositif comprend avantageusement des moyens de détermination de la consigne de couple moteur appliqué par le moteur, aptes à déterminer la valeur de consigne de couple moteur appliqué par le moteur à partir d'un taux d'enfoncement de la pédale et du régime moteur en cours.

D'autres avantages et caractéristiques de l'invention apparaîtront à l'examen de la description détaillée d'un mode de réalisation de l'invention, nullement limitatif, et des dessins annexés, sur lesquels :

- la figure 1 représente, de manière schématique, un dispositif d'estimation de l'accélération longitudinale potentielle pour un rapport de transmission potentielle d'un véhicule automobile équipé d'une boîte de vitesses automatique ;
- la figure 2 illustre un procédé d'estimation de l'accélération longitudinale potentielle pour un rapport de transmission potentiel d'un véhicule automobile équipé d'une boîte de vitesses automatique ;
- la figure 3 illustre de manière schématique la réponse en couple d'un moteur suralimenté lors d'une accélération en montée avec un passage montant.

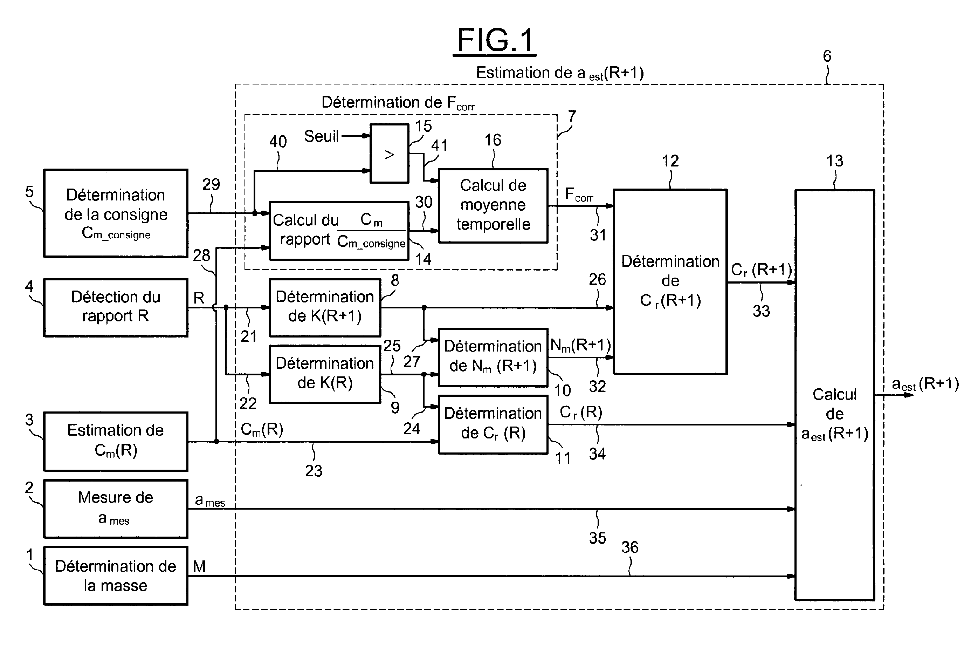

Sur la figure 1, a été représenté de manière schématique un exemple de dispositif d'estimation de l'accélération longitudinale potentielle $a_{est}(R+1)$ pour un rapport de transmission potentiel R+1 d'un véhicule automobile équipé d'une boîte de vitesses automatique, selon un mode de réalisation. Le véhicule est en cours de déplacement avec un rapport de transmission en cours R, le rapport de transmission potentiel R+1 étant différent du rapport de transmission en cours R, et, dans l'exemple illustré, correspondant au rapport de transmission supérieur au rapport de transmission en cours R.

Le dispositif d'estimation de l'accélération longitudinale potentielle $a_{est}(R+1)$ pour un rapport de transmission potentiel R+1 d'un véhicule automobile équipé d'une boîte de vitesses automatique, comprend un module 1 de détermination de la masse M du véhicule automobile. Le dispositif comprend en outre un module 2 de mesure de l'accélération longitudinale en cours $a_{mes}$ apte à mesurer l'accélération longitudinale en cours $a_{mes}$ pour le rapport de transmission en cours R. Le dispositif comprend également un module d'estimation 3 du couple moteur en cours $C_m(R)$, ainsi qu'un module 4 de détection du rapport de transmission en cours R et un module 5 de détermination de la consigne de couple moteur à appliquer par le moteur $C_{m\_consigne}$. Le dispositif comprend aussi des moyens 6 d'estimation de l'accélération longitudinale potentielle $a_{est}(R+1)$ pour un rapport de transmission potentiel R+1 d'un véhicule automobile équipé d'une boîte de vitesse automatique.

La masse M du véhicule est estimée par le module 1 de détermination de la masse M à l'aide par exemple du procédé d'estimation de masse du brevet FR 2 737 761 qui utilise pour déterminer la masse M du véhicule, la vitesse mesurée du véhicule, le rapport de transmission de la boîte de vitesses, le régime moteur et l'angle de l'ouverture des papillons de gaz moteur.

Le module 2 de mesure de l'accélération en cours $a_{mes}$, effectue la mesure à l'aide de la dérivation de la vitesse du véhicule automobile, qui peut être fournie par exemple par les capteurs de vitesse nécessaires pour la réalisation de la fonction ABS.

Le module 3 d'estimation du couple moteur en cours $C_m(R)$ estime le couple moteur effectif pour un rapport de transmission R à l'aide d'un calculateur de gestion du moteur en fonction du régime moteur en cours $N_m(R)$ et des paramètres de pilotage du moteur tel que, par exemple, le débit d'air entrant, et la masse d'essence injectée.

Le module 4 de détection du rapport de transmission en cours R permet de détecter le rapport de transmission en cours R à partir d'une valeur représentative du rapport de transmission.

Le module 5 de détermination de la consigne du couple moteur à appliquer $C_{m\_consigne}$ détermine la consigne de couple appliqué par le moteur à partir d'un algorithme interne au calculateur de gestion du moteur prenant en compte l'enfoncement de la pédale d'accélérateur et le régime moteur.

Les moyens 6 d'estimation de l'accélération longitudinale potentielle $a_{est}(R+1)$ comprennent un module 7 de détermination d'un facteur de correction $F_{corr}$. Les moyens 6 d'estimation de l'accélération longitudinale potentielle comprennent également un module de détermination 8 du rapport de démultiplication de la transmission sur le rapport de transmission potentiel K(R+1). Les moyens 6 comprennent aussi un module 9 de détermination du rapport de démultiplication de la transmission sur les rapports de transmission en cours K(R). Les moyens 6 comprennent également un module 10 de détermination du régime moteur potentiel pour le rapport de transmission potentiel $N_m(R+1)$, et un module 11 de détermination du couple à la roue en cours $C_r(R)$ pour un rapport de transmission en cours R. Les moyens 6 comprennent également un module 12 de détermination du couple à la roue potentiel $C_r(R+1)$ pour un rapport de transmission potentiel R+1, et un module 13 de calcul de l'accélération longitudinale potentielle $a_{est}(R+1)$ pour un rapport de transmission potentiel R+1.

Le module 8 de détermination du rapport de démultiplication de la transmission pour le rapport de transmission potentiel K(R+1), ainsi que le module 9 de détermination du rapport de démultiplication de la transmission sur le rapport de transmission en cours K(R), reçoivent tous deux en entrée la valeur du rapport de transmission en cours R transmise par le module 4 de détection du rapport de transmission en cours R via les connexions respectives 21 et 22, et délivrent respectivement en sortie la valeur du rapport de démultiplication de la transmission potentiel K(R+1) et le rapport de démultiplication de la transmission en cours K(R).

Le rapport de démultiplication de la transmission en cours K(R) est transmis via une connexion 24 au module 11 de détermination du couple à la roue en cours $C_r(R)$ qui reçoit également via une connexion 23, la valeur du couple moteur en cours $C_m(R)$ délivré par le module 3 d'estimation du couple moteur en cours $C_m(R)$. Le couple à la roue en cours $C_r(R)$ est obtenu à l'aide de la relation suivante :

$$C_r(R) = C_m(R) \times K(R) \qquad (1)$$

Le rapport de démultiplication de la transmission en cours K(R) est aussi transmis via une connexion 25 au module 10 de détermination du régime moteur potentiel $N_m(R+1)$, qui reçoit également en entrée via une connexion 27 le rapport de démultiplication de la transmission potentielle K(R+1) pour le rapport de transmission potentiel R+1 délivré par le module 8 de détermination du rapport de démultiplication de la transmission potentielle K(R+1).

Le régime moteur potentiel $N_m(R+1)$ correspond au régime que le moteur atteindra après le passage montant au rapport de transmission potentiel, dans l'exemple ici au rapport directement supérieur au rapport de transmission en cours R, estimé par la relation :

$$N_m(R+1) = \frac{K(R+1)}{K(R)} \times N_m(R) \qquad (2)$$

Le module 7 de détermination du facteur de correction $F_{corr}$ comprend un module 14 de calcul du ratio de perte de couple instantanée correspondant à un rapport entre le couple moteur en cours $C_m(R)$ et la consigne de couple moteur $C_{m\_consigne}$ à appliquer par le moteur. Le module 7 de détermination du facteur de correction $F_{corr}$ reçoit en entrée la consigne de couple moteur à appliquer $C_{m\_consigne}$ délivrée par le module 5 de détermination de la consigne de couple moteur $C_{m\_consigne}$ via une connexion 29, et la valeur du couple moteur en cours $C_m(R)$ estimée par le module 3 d'estimation du couple moteur en cours et transmise via une connexion 28.

Le module 7 de détermination du facteur de correction $F_{corr}$ comprend également un module 15 de comparaison de la consigne du couple moteur $C_{m\_consigne}$ à une valeur de seuil notée Seuil, délivrant un signal d'activation de type booléen d'un module 16 de calcul de la moyenne temporelle. Le seuil correspond à la valeur de couple moteur limite séparant la plage atmosphérique de la plage suralimentée, la plage atmosphérique correspondant à une plage de valeurs de couple moteur inférieures au seuil, et la plage suralimentée correspondant à une plage de valeurs de couple moteur supérieures au seuil. Si la consigne de couple moteur $C_{m\_consigne}$ est inférieure au seuil, alors le module 15 de comparaison délivre un signal booléen nul au module 16 de calcul de moyenne temporelle via une connexion 29, sinon le signal booléen délivré est non nul.

Le module 7 de détermination du facteur de correction $F_{corr}$ comprend aussi le module 16 de calcul de la moyenne temporelle du ratio de perte de couple correspondant au rapport entre le couple moteur en cours $C_m(R)$ et la consigne de couple moteur à appliquer $C_{m\_consigne}$ qui est transmise par le module 14 du calcul du rapport au module 16 de calcul de la moyenne temporelle via une connexion 30. Si le signal d'activation du module 16 de calcul de la moyenne temporelle, issu du module 15 de comparaison, est non nul, alors le module 16 de calcul de moyenne temporelle du rapport réalise la moyenne temporelle du rapport du couple moteur en cours $C_m(R)$ sur la consigne de couple moteur à appliquer $C_{m\_consigne}$, sinon, si le signal booléen issu du module 15 de comparaison est nul, la moyenne temporelle n'est pas effectuée et le module 16 de calcul de moyenne temporelle délivre un signal $F_{corr}$ dont la valeur est maintenue égale à la dernière valeur calculée du facteur de correction $F_{corr}(n-1)$, pour un signal d'activation non nul.

Le facteur de correction $F_{corr}$ délivré par le module 7 de détermination du facteur de correction $F_{corr}$ est transmis via une connexion 31 au module 12 de détermination du couple à la roue potentiel $C_r(R+1)$, qui reçoit également en entrée, via une connexion 26, la valeur du rapport de démultiplication de la transmission potentiel $K(R+1)$ et, via une connexion 32, le régime moteur potentiel $N_m(R+1)$. Le module 12 de détermination du couple à la roue potentiel $C_r(R+1)$ détermine ainsi le couple à la roue sur le rapport potentiel à l'aide de la relation suivante :

$$C_r(R+1) = F_{corr} \times C_{m\_max\_calculé}\left[N_m(R+1)\right] \times K(R+1) \qquad (3)$$

Le facteur $C_{m\_max\_calculé}$ correspondant au couple moteur maximal théorique calculé en fonction du régime moteur potentiel $N_m(R+1)$. Le couple à la roue potentiel $C_r(R+1)$ ainsi déterminé, est transmis via une connexion 33 au module 13 de calcul de l'accélération longitudinale potentielle $a_{est}(R+1)$ qui reçoit également en entrée la valeur du couple à la roue en cours $C_r(R)$ via une connexion 34, l'accélération en cours $a_{mes}$ via une connexion 35, et la masse M du véhicule automobile via une connexion 36. Le module 13 de calcul de l'accélération potentielle $a_{est}(R+1)$ détermine ainsi l'accélération sur le rapport de transmission potentiel à l'aide de la relation :

$$a_{est}(R+1) = a_{mes} + \frac{1}{M}\frac{C_r(R+1) - C_r(R)}{r} \qquad (4)$$

Avec r le rayon de la roue.

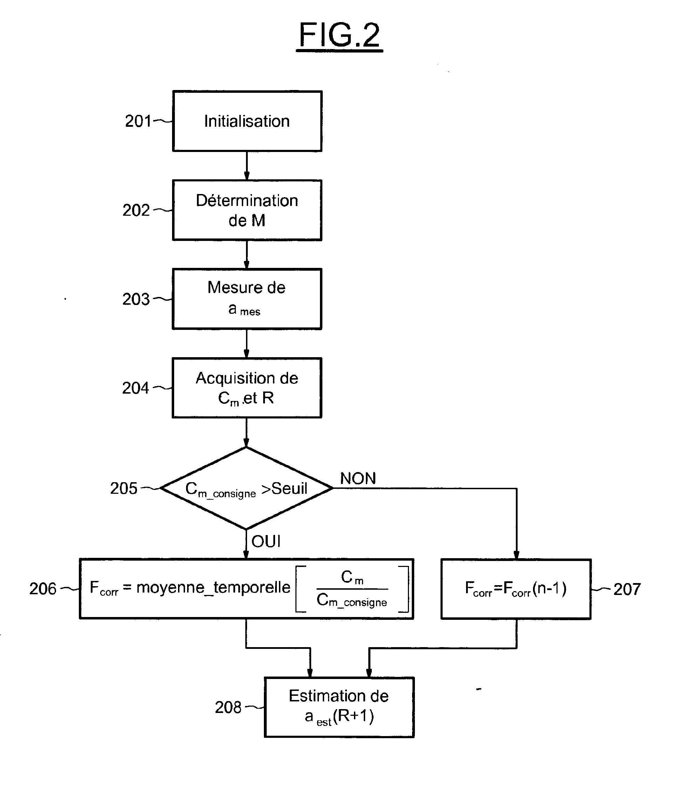

La figure 2 illustre, selon un mode de mise en oeuvre, un procédé d'estimation de l'accélération longitudinale potentielle $a_{est}(R+1)$ pour un rapport de transmission potentiel R+1 d'un véhicule automobile équipé d'une boîte de vitesses automatique. Dans une première étape 201, les paramètres utilisés dans le procédé sont initialisés. Dans une étape 202, on détermine ensuite la masse M du véhicule à l'aide par exemple d'un procédé d'estimation de la masse M du véhicule décrit dans le document FR 2 737 761 utilisant la vitesse mesurée du véhicule, le rapport de transmission en cours R de la boîte de vitesses, le régime moteur et la quantité de carburant injecté dans le moteur. Dans une étape suivante 203, on mesure l'accélération longitudinale en cours $a_{mes}$ obtenue par dérivation de la vitesse du véhicule qui est elle-même fournie, par exemple, par un calculateur de l'ABS. Dans une étape suivante 204, on estime la valeur du couple moteur en cours $C_m(R)$ et on détecte le rapport de transmission en cours R. Dans une étape 205, on compare la consigne de couple moteur à appliquer par le moteur $C_{m\_consigne}$ à une valeur seuil. Si la consigne de couple moteur à appliquer par le moteur $C_{m\_consigne}$ est supérieure à la valeur seuil, alors on effectue dans une étape 206, un calcul du facteur de correction $F_{corr}$ qui correspond à la moyenne temporelle du ratio de perte de couple instantanée, c'est-à-dire à la moyenne temporelle du rapport entre la valeur du couple moteur en cours $C_m(R)$ et la consigne de couple moteur à appliquer par le moteur $C_{m\_consigne}$. En revanche, si la consigne de couple moteur à appliquer $C_{m\_consigne}$ n'est pas supérieure au seuil, alors, dans une étape 207, la valeur de facteur de correction $F_{corr}$ est maintenue égale à la dernière valeur calculée du facteur de correction $F_{corr}$ pour une consigne de couple moteur à appliquer $C_{m\_conigne}$ supérieure au seuil. Enfin, dans une étape finale 208, on estime l'accélération longitudinale potentielle $a_{est}(R+1)$ pour un rapport de transmission potentiel R+1 à partir du facteur de correction $F_{corr}$ déterminé dans l'étape 206 ou 207 suivant le résultat du test dans l'étape 205.

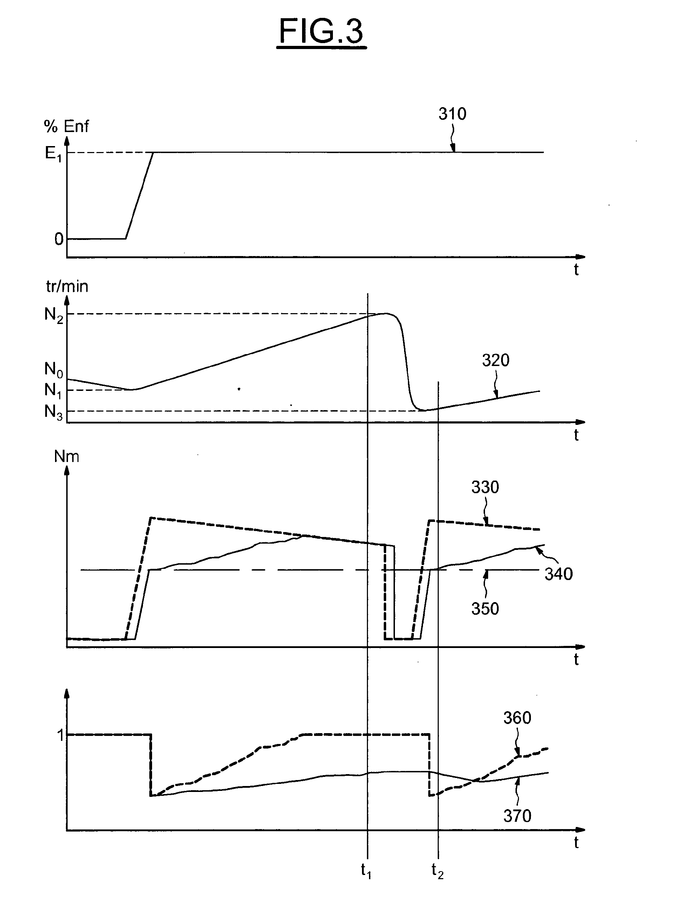

La figure 3 présente de manière schématique la réponse en couple d'un moteur suralimenté lors d'une accélération en montée avec un passage montant au cours du temps t.

La courbe 310 représente le pourcentage d'enfoncement %Enf de la pédale d'accélérateur au cours du temps t. Dans l'exemple illustré, la pédale d'accélérateur est totalement relâchée au départ puis subit une pression qui se stabilise à un pourcentage d'enfoncement $E_1$ de la pédale d'accélérateur. La courbe 320 représente l'évolution du régime moteur exprimé en tours par minute tr/min au cours du temps t. Le régime moteur est à un premier niveau $N_0$ correspondant au régime moteur sans demande d'accélération de la part du conducteur à l'aide de la pédale d'accélération. Lors de la demande d'accélération on observe une diminution du régime moteur jusqu'à une valeur $N_1$ avant son augmentation jusqu'à une valeur $N_2$, ce phénomène correspondant à un premier passage de vitesse, puis une seconde diminution rapide jusqu'à une valeur $N_3$ avant une nouvelle remontée signalée entre les repères temporels $t_1$ et $t_2$, repères temporels entre lesquels se déclenche le passage montant de rapport de transmission qu'on observe.

La courbe 330 représente la consigne de couple moteur au cours du temps t, déterminée en fonction du rapport de transmission et du taux d'enfoncement de la pédale d'accélération. La courbe 340 représente quant à elle le couple moteur réel en cours $C_m(R)$ au cours du temps t, et la courbe 350 représente le seuil de couple moteur délimitant la plage atmosphérique pour la partie inférieure à ce seuil, et la plage suralimentée pour la partie supérieure à ce seuil. On observe que le couple moteur réel augmente rapidement quand il se trouve dans la plage atmosphérique, et plus lentement dans la plage suralimentée.

Enfin la courbe 360 représente le facteur de correction instantanée tel qu'utilisé dans le document FR 2 842 579, c'est-à-dire correspondant au ratio de perte de couple instantanée, tandis que la courbe 370 représente le facteur de correction moyen correspondant à la moyenne temporelle du ratio de perte de couple instantanée. On constate que la valeur du facteur de correction moyen avant $t_1$ le passage montant de rapport de transmission est une meilleure estimation du ratio de perte de couple observée après $t_2$ le passage montant que le facteur de correction instantanée avant $t_1$ le passage montant, et la surestimation de l'accélération prévue après le passage montant de rapport de transmission est par conséquent moindre.

L'invention permet tout d'abord d'estimer l'accélération longitudinale potentielle maximale que le véhicule automobile peut avoir pour un rapport de transmission potentiel. L'invention permet également de déterminer un facteur correctif se fondant sur l'exacte valeur de la consigne appliquée par le calculateur de commande du moteur, et de calculer un moyenne temporelle du ratio de perte de couple instantanée lorsque la consigne de couple moteur se trouve dans la plage suralimentée, et ainsi d'obtenir une estimation plus précise de l'accélération longitudinale potentielle.

## Revendications

1. Procédé d'estimation de l'accélération longitudinales potentielle $a_{est}(R+1)$ pour un rapport de transmission potentiel (R+1) d'un véhicule automobile équipé d'une boîte de vitesse automatique, le véhicule étant en cours de déplacement avec un rapport de transmission en cours (R) de la boîte de vitesse, dans lequel on détermine la masse (M) du véhicule, on mesure l'accélération pour le rapport de transmission en cours ($a_{mes}$), on estime une valeur du couple moteur en cours ($C_m(R)$) pour le rapport de transmission en cours (R), on estime l'accélération potentielle $a_{est}(R+1)$ du véhicule pour la valeur du rapport de transmission potentiel (R+1), et on calcule l'accélération longitudinale potentielle $a_{est}(R+1)$ du véhicule en tenant compte du couple moteur maximal théorique calculé ($C_{m\_max\_calculé}$) en fonction du régime moteur potentiel $N_m(R+1)$ pour la valeur du rapport de transmission potentiel (R+1), **caractérisé en ce qu'**un facteur de correction ($F_{corr}$) est déterminé à partir d'un ratio de perte de couple instantané, correspondant au rapport entre l'estimation du couple moteur en cours ($C_m$) et une valeur de consigne de couple moteur ($C_{m-consigne}$) appliquée par le moteur, le facteur de correction ($P_{corr}$) étant déterminé à partir de la moyenne temporelle du ratio de perte de couple instantané correspondant au rapport entre l'estimation du couple moteur en cours ($C_m(R)$) et une valeur de consigne de couple moteur ($C_{m-consigne}$) appliqué par le moteur, lorsque le couple moteur de consigne appliquée ($C_{m\_consigne}$) par le moteur est supérieur à un seuil.

2. Procédé selon la revendication 1, dans lequel on estime l'accélération potentielle $a_{est}(R+1)$ du véhicule pour une valeur de rapport de transmission potentiel (R+1) en tenant compte également du couple à la roue en cours ($C_r(R)$) pour le rapport de transmission en cours (R) et du couple à la roue potentiel ($C_r(R+1)$) pour le rapport de transmission potentiel (R+1).

3. Procédé selon la revendication 1, dans lequel, pour une valeur de couple moteur de consigne ($C_{m\_consigne}$) appliquée par le moteur inférieure au seuil, la valeur du facteur de correction ($F_{corr}$) est maintenue égale à la dernière valeur calculée de la moyenne temporelle du ratio de perte de couple instantané correspondant au rapport entre l'estimation du couple moteur en cours ($C_m(R)$) et une valeur de consigne de couple moteur ($C_{m\_consigne}$) appliqué par le moteur.

4. Procédé selon l'une des revendications 1 à 3, dans lequel la moyenne temporelle du ratio de perte de couple moteur appliquée par le moteur est déterminée par un filtrage au premier ordre avec une constante de temps réglable.

5. Dispositif d'estimation de l'accélération longitudinale potentielle $a_{est}(R+1)$ pour un rapport de transmission potentiel (R+1) d'un véhicule automobile équipé d'une boîte de vitesse automatique, le véhicule étant en cours de déplacement avec un rapport de transmission en cours (R) de la boîte de vitesse, comprenant des moyens (1) de détermination de la masse (M) du véhicule, des moyens (2) de mesure aptes à mesurer l'accélération en cours ($a_{mes}$) pour le rapport de transmission en cours (R), des moyens (3) d'estimation du couple moteur en cours ($C_m(R)$) aptes à estimer le couple moteur pour le rapport de transmission en cours (R), et des moyens d'estimation (6) de l'accélération potentielle $a_{est}(R+1)$ aptes à estimer l'accélération longitudinale potentielle $a_{est}(R+1)$ du véhicule pour la valeur de rapport de transmission potentiel (R+1) à partir d'un couple moteur maximal théorique calculé ($c_{m\_max\_calculé}$) en fonction du régime moteur potentiel ($N_m(R+1)$) pour la valeur du rapport de transmission potentiel (R+1), **caractérisé en ce qu'**il comprend des moyens de correction (14) aptes à calculer le facteur de correction ($F_{corr}$) à partir d'un ratio de perte de couple instantané, correspondant au rapport entre l'estimation du couple moteur en cours ($C_m(R)$) et une valeur de consigne de couple moteur ($C_{m\_consigne}$) appliquée par le moteur, et des moyens de calcul (16) aptes à calculer la moyenne temporelle du ratio de perte de couple instantané correspondant au rapport entre l'estimation du couple moteur en cours ($C_m(R)$) et une valeur de consigne de couple moteur ($C_{m\_consigne}$) appliqué par le moteur, lorsque le couple moteur de consigne ($C_{m\_consigne}$) appliquée par le moteur est supérieur à un seuil.

6. Dispositif selon la revendication 5, dans lequel les moyens d'estimation (6) de l'accélération potentielle $a_{est}(R+1)$ comprennent des moyens de détermination du couple à la roue en cours ($C_r(R)$) pour le rapport de transmission en cours (R), et des moyens de détermination du couple à la roue potentiel ($C_r(R+1)$) pour le rapport de transmission potentiel (R+1).

7. Dispositif selon l'une des revendications 5 ou 6, **caractérisé en ce qu'**il comprend des moyens de détermination (5) de la consigne de couple moteur ($C_{m\_consigne}$) appliquée par le moteur aptes à déterminer la valeur de la consigne de couple moteur ($C_{m\_consigne}$) appliquée par le moteur à partir d'un taux d'enfoncement de la pédale (%Enf) et du régime moteur en cours ($N_m(R)$).

**Claims**

1. Method for estimating the potential longitudinal acceleration $a_{est}(R+1)$ for a potential transmission ratio (R+1) of a motor vehicle fitted with an automatic gearbox, the vehicle being in the process of moving with a current transmission ratio (R) of the gearbox, in which the weight (M) of the vehicle is determined, the acceleration is measured for the current transmission ratio ($a_{mes}$), a value of the current engine torque ($C_m(R)$) is estimated for the current transmission ratio (R), the potential acceleration $a_{est}(R+1)$ of the vehicle is estimated for the value of the potential transmission ratio (R+1), and the potential longitudinal acceleration $a_{est}(R+1)$ of the vehicle is computed while taking account of the computed theoretical maximum engine torque ($C_{m\_max\_calculé}$) as a function of the potential engine speed $N_m(R+1)$ for the value of the potential transmission ratio (R+1), **characterized in that** a correction factor ($F_{corr}$) is determined on the basis of a ratio of instantaneous torque loss, corresponding to the ratio between the estimate of the current engine torque ($C_m$) and an engine torque setpoint value ($C_{m-consigne}$) applied by the engine, the correction factor ($F_{corr}$) being determined on the basis of the time average of the ratio of instantaneous torque loss corresponding to the ratio between the estimate of the current engine torque ($C_m(R)$) and an engine torque setpoint value ($C_{m\_consigne}$) applied by the engine, when the setpoint engine torque ($C_{m-consigne}$) applied by the engine is above a threshold.

**2.** Method according to Claim 1, in which the potential acceleration $a_{est}(R+1)$ of the vehicle for a value of potential transmission ratio (R+1) also taking account of the current torque at the wheel ($C_r(R)$) for the current transmission ratio (R) and of the potential torque at the wheel ($C_r(R+1)$) for the potential transmission ratio (R+1).

**3.** Method according to Claim 1, in which, for a setpoint engine torque value ($C_{m\_consigne}$) applied by the engine that is below the threshold, the value of the correction factor ($F_{corr}$) is kept equal to the last computed value of the time average of the instantaneous torque loss ratio corresponding to the ratio between the estimate of the current engine torque ($C_m(R)$) and an engine torque of setpoint value ($C_{m\_consigne}$) applied by the engine.

**4.** Method according to one of Claims 1 to 3, in which the time average of the engine torque loss ratio applied by the engine is determined by a first-order filtering with an adjustable time constant.

**5.** Device for estimating the potential longitudinal acceleration $a_{est}(R+1)$ for a potential transmission ratio (R+1) of a motor vehicle fitted with an automatic gearbox, the vehicle being in the process of moving with a current transmission ratio (R) of the gearbox, comprising means (1) for determining the weight (M) of the vehicle, measurement means (2) capable of measuring the current acceleration ($a_{mes}$) for the current transmission ratio (R), means (3) for estimating the current engine torque ($C_m(R)$) capable of estimating the engine torque for the current transmission ratio (R), and means (6) for estimating the potential acceleration $a_{est}(R+1)$ capable of estimating the potential longitudinal acceleration $a_{est}(R+1)$ of the vehicle for the value of the potential transmission ratio (R+1) on the basis of a computed maximum theoretical engine torque ($C_{m\_max\_calculé}$) as a function of the potential engine speed ($N_m(R+1)$) for the value of the potential transmission ratio (R+1), **characterized in that** it comprises correction means (14) capable of computing the correction factor ($F_{corr}$) on the basis of an instantaneous torque loss ratio, corresponding to the ratio between the estimate of the current engine torque ($C_m(R)$) and an engine torque setpoint value ($C_{m\_consigne}$) applied by the engine, and computing means (16) capable of computing the time average of the instantaneous torque loss ratio corresponding to the ratio between the estimate of the current engine torque ($C_m(R)$) and an engine torque setpoint value ($C_{m\_consigne}$) applied by the engine, when the setpoint engine torque ($C_{m\_consigne}$) applied by the engine is above a threshold.

**6.** Device according to Claim 5, in which the means (6) for estimating the potential acceleration $a_{est}(R+1)$ comprise means for determining the current torque at the wheel ($C_r(R)$) for the current transmission ratio (R), and means for determining the potential torque at the wheel ($C_r(R+1)$) for the potential transmission ratio (R+1).

**7.** Device according to one of Claims 5 and 6, **characterized in that** it comprises means (5) for determining the engine torque setpoint ($C_{m\_consigne}$) applied by the engine, which means are capable of determining the engine torque setpoint value ($C_{m\_consigne}$) applied by the engine on the basis of an extent of depression of the pedal (%Enf) and of the current engine speed ($N_m(R)$).

**Patentansprüche**

**1.** Verfahren zur Schätzung der potenziellen Längsbeschleunigung $a_{est}(R+1)$ für ein potenzielles Übersetzungsverhältnis (R+1) eines mit einem Automatikgetriebe ausgestatteten Kraftfahrzeugs, wobei das Fahrzeug sich mit einem laufenden Übersetzungsverhältnis (R) des Getriebes bewegt, bei dem die Masse (M) des Fahrzeugs bestimmt wird, die Beschleunigung für das laufende Übersetzungsverhältnis ($a_{mes}$) gemessen wird, ein Wert des laufenden Antriebsdrehmoments ($C_m(R)$) für das laufende Übersetzungsverhältnis (R) geschätzt wird, die potenzielle Beschleunigung $a_{est}(R+1)$ des Fahrzeugs für den Wert des potenziellen Übersetzungsverhältnisses (R+1) geschätzt wird, und die potenzielle Längsbeschleunigung $a_{est}(R+1)$ des Fahrzeugs unter Berücksichtigung des berechneten theoretischen maximalen Antriebsdrehmoments ($C_{m\_max\_calculé}$) abhängig von der potenziellen Antriebsdrehzahl $N_m$(R+1) für den Wert des potenziellen Übersetzungsverhältnisses (R+1) berechnet wird, **dadurch gekennzeichnet, dass** ein Korrekturfaktor ($F_{corr}$) ausgehend von einer augenblicklichen Drehmomentverlust-Kennzahl bestimmt wird, die dem Verhältnis zwischen der Schätzung des laufenden Antriebsdrehmoments ($C_m$) und einem Sollwert eines vom Motor angelegten Drehmoments ($C_{m\_consigne}$) entspricht, wobei der Korrekturfaktor ($F_{corr}$) ausgehend vom zeitlichen Mittel der augenblicklichen Drehmomentverlust-Kennzahl entsprechend dem Verhältnis zwischen der Schätzung des laufenden Antriebsdrehmoments ($C_m(R)$) und einem Sollwert eines vom Motor angewendeten Drehmoments ($C_{m-consigne}$) bestimmt wird, wenn das vom Motor angewendete Soll-Antriebsdrehmoment ($C_{m\_consigne}$) höher als eine Schwelle ist.

**2.** Verfahren nach Anspruch 1, bei dem die potenzielle Beschleunigung $a_{est}(R+1)$ des Fahrzeugs für einen Wert eines potenziellen Übersetzungsverhältnisses (R+1) unter Berücksichtigung ebenfalls des laufenden Raddrehmoments ($C_r$(R)) für das laufende Übersetzungsverhältnis (R) und des potenziellen Raddrehmoments ($C_r$(R+1)) für das potenzielle Übersetzungsverhältnis (R+1) geschätzt wird.

3.  Verfahren nach Anspruch 1, bei dem für einen Sollwert eines vom Motor angewendeten Antriebsdrehmoments ($C_{m\_consigne}$) unterhalb des Schwellwerts der Wert des Korrekturfaktors ($F_{corr}$) gleich dem letzten berechneten Wert des zeitlichen Mittels der Verlustkennzahl des augenblicklichen Drehmoments gehalten wird, entsprechend dem Verhältnis zwischen der Schätzung des laufenden Antriebsdrehmoments ($C_m$(R)) und einem Sollwert des vom Motor angewendeten Drehmoments ($C_{m\_consigne}$).

4.  Verfahren nach einem der Ansprüche 1 bis 3, bei dem das zeitliche Mittel der Verlustkennzahl eines vom Motor angewendeten Drehmoments durch eine Filterung erster Ordnung mit einer einstellbaren Zeitkonstante bestimmt wird.

5.  Vorrichtung zur Schätzung der potenziellen Längsbeschleunigung $a_{est}$(R+1) für ein potenzielles Übertragungsverhältnis (R+1) eines mit einem Automatikgetriebe ausgestatteten Kraftfahrzeugs, wobei das Fahrzeug sich mit einem laufenden Übersetzungsverhältnis (R) des Getriebes bewegt, die Einrichtungen (1) zur Bestimmung der Masse (M) des Fahrzeugs, Messeinrichtungen (2), die die laufende Beschleunigung ($a_{mes}$) für das laufende Übersetzungsverhältnis (R) messen können, Schätzeinrichtungen (3) des laufenden Antriebsdrehmoments ($C_m$(R)), die das Drehmoment für das laufende Übersetzungsverhältnis (R) schätzen können, und Schätzeinrichtungen (6) der potenziellen Beschleunigung $a_{est}$(R+1)) enthält, die die potenzielle Längsbeschleunigung $a_{est}$(R+1)) des Fahrzeugs für den Wert des potenziellen Übersetzungsverhältnisses (R+1) ausgehend von einem berechneten theoretischen maximalen Antriebsdrehmoment ($C_{m\_max\_calculé}$) abhängig von der potenziellen Antriebsdrehzahl ($N_m$(R+1)) für den Wert des potenziellen Übersetzungsverhältnisses (R+1) schätzen können, **dadurch gekennzeichnet, dass** sie Korrektureinrichtungen (14), die den Korrekturfaktor ($F_{corr}$) ausgehend von einer augenblicklichen Drehmoment-Verlustkennzahl berechnen können, entsprechend dem Verhältnis zwischen der Schätzung des laufenden Antriebsdrehmoments ($C_m$(R)) und einem Sollwert des vom Motor angewendeten Antriebsdrehmoments ($C_{m\_consigné}$), und Recheneinrichtungen (16) enthält, die das zeitliche Mittel der augenblicklichen Drehmoment-Verlustkennzahl berechnen können, die dem Verhältnis zwischen der Schätzung des laufenden Antriebsdrehmoments ($C_m$(R)) und einem Sollwert eines vom Motor angewendeten Drehmoments ($C_{m\_consigne}$) entspricht, wenn das vom Motor angewendete Soll-Antriebsdrehmoment ($C_{m\_consigne}$) höher als ein Schwellwert ist.

6.  Vorrichtung nach Anspruch 5, bei der die Schätzeinrichtungen (6) der potenziellen Beschleunigung $a_{est}$(R+1) Bestimmungseinrichtungen des laufenden Raddrehmoments ($C_r$(R)) für das laufende Übersetzungsverhältnis (R) und Bestimmungseinrichtungen des potenziellen Raddrehmoments ($C_r$(R+1)) für das potenzielle Übersetzungsverhältnis (R+1) enthalten.

7.  Vorrichtung nach einem der Ansprüche 5 oder 6, **dadurch gekennzeichnet, dass** sie Bestimmungseinrichtungen (5) des Sollwerts des vom Motor angewendeten Antriebsdrehmoments ($C_{m\_consigne}$) enthält, die den Wert des vom Motor angewendeten Drehmoments ($C_{m\_consigne}$) ausgehend von einem Eindrückgrad des Pedals (%Eindr) und der laufenden Motordrehzahl ($N_m$(R)) bestimmen können.

## FIG.1

Estimation de $a_{est}(R+1)$

6

Détermination de $F_{corr}$

7

40 Seuil ⟶ | > | 15

41

16

Calcul de moyenne temporelle

12

13

5 | Détermination de la consigne $C_{m\_consigne}$

29

Calcul du rapport $\dfrac{C_m}{C_{m\_consigne}}$

30

14

$F_{corr}$

31

Détermination de $C_r(R+1)$

$C_r(R+1)$

33

Calcul de $a_{est}(R+1)$

$a_{est}(R+1)$

4 | Détection du rapport R

R

28

Détermination de K(R+1)

8

26

21

Détermination de K(R)

22

Détermination de $N_m(R+1)$

$N_m(R+1)$

25

27

10

32

9

Détermination de $C_r(R)$

24

$C_r(R)$

11

34

3 | Estimation de $C_m(R)$

$C_m(R)$

23

2 | Mesure de $a_{mes}$

$a_{mes}$

35

36

1 | Détermination de la masse

M

EP 2 168 836 B1

# FIG.2

201 — Initialisation

202 — Détermination de M

203 — Mesure de $a_{mes}$

204 — Acquisition de $C_m$ et R

205 — $C_{m\_consigne} >$ Seuil

NON

OUI

206 — $F_{corr} = $ moyenne_temporelle $\left[ \dfrac{C_m}{C_{m\_consigne}} \right]$

207 — $F_{corr} = F_{corr}(n-1)$

208 — Estimation de $a_{est}(R+1)$

# FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2842579
- JP 2003267086 A
- FR 2847636
- DE 19854254
- JP 4321748 A
- FR 2461169
- DE 19921937
- FR 2737761